Europäisches Patentamt

European Patent Office

Office européen des brevets

(19)

(11) **EP 1 075 594 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.⁷: **F02D 41/24**

(21) Anmeldenummer: **99916846.1**

(86) Internationale Anmeldenummer:
**PCT/EP99/01882**

(22) Anmeldetag: **22.03.1999**

(87) Internationale Veröffentlichungsnummer:
**WO 99/057426 (11.11.1999 Gazette 1999/45)**

(54) **VERFAHREN ZUR BESTIMMUNG VON KENNFELDDATEN ZUR KENNFELDSTEUERUNG EINES VERBRENNUNGSMOTORS**

METHOD FOR DETERMINING CHARACTERISTIC MAPPING DATA FOR CONTROLLING THE CHARACTERISTIC MAP OF AN INTERNAL COMBUSTION ENGINE

PROCEDE POUR LA DETERMINATION DE DONNEES DE DIAGRAMME CARACTERISTIQUE POUR LA DEFINITION DES RESEAUX DE CARACTERISTIQUES D'UN MOTEUR A COMBUSTION INTERNE

(84) Benannte Vertragsstaaten:
**AT DE ES FR GB IT PT SE**

(30) Priorität: **30.04.1998 DE 19819445**

(43) Veröffentlichungstag der Anmeldung:
**14.02.2001 Patentblatt 2001/07**

(60) Teilanmeldung:
**02022273.3 / 1 273 782**

(73) Patentinhaber: **Volkswagen Aktiengesellschaft**
**38436 Wolfsburg (DE)**

(72) Erfinder:
• **WASCHATZ, Uwe**
**D-38527 Meine (DE)**

• **HEINRICH, Axel**
**D-38527 Meine (DE)**

(74) Vertreter: **Banzer, Hans-Jörg, Dipl.-Ing. et al**
**Kraus & Weisert**
**Patent- und Rechtsanwälte**
**Thomas-Wimmer-Ring 15**
**80539 München (DE)**

(56) Entgegenhaltungen:
**EP-A- 0 301 548      EP-A- 0 814 391**
**DE-A- 19 514 423     US-A- 4 495 926**

• **PATENT ABSTRACTS OF JAPAN vol. 007, no. 112 (M-215), 17. Mai 1983 (1983-05-17) & JP 58 032936 A (NISSAN JIDOSHA KK), 26. Februar 1983 (1983-02-26)**

## Beschreibung

Die vorliegende Erfindung betrifft ein Verfahren zur Bestimmung von Kennfelddaten zur Kennfeldsteuerung eines Verbrennungsmotors nach dem Oberbegriff des Anspruchs 1, gemäß EP-A-391573.

Es sind Verfahren und Vorrichtungen in Gestalt elektronischer Motorsteuergeräte zur Steuerung von Verbrennungsmotoren bekannt, bei denen mittels Sensoren ein oder mehrere Einflußfaktoren, die den Betrieb des Verbrennungsmotors beeinflussen, gemessen und über Eingangskanäle dem Motorsteuergerät zugeführt werden. Das Motorsteuergerät verfügt über mindestens eine Speichereinheit, in der in Gestalt eines sogenannten Kennfeldes für eine Vielzahl möglicher Werte dieser Einflußfaktoren Ausgangswerte für eine oder mehrere Zielgrößen gespeichert sind. Eine Rechen- und Datenverarbeitungseinheit in dem elektronischen Motorsteuergerät wählt aus den in der Speichereinheit gespeicherten Werten des Kennfeldes diejenigen Ausgangswerte aus, die den gemeldeten Werten der Einflußfaktoren zugeordnet sind. Diese Ausgangswerte für Zielgrößen werden von der Rechen- und Datenverarbeitungseinheit über einen oder mehrere Ausgangskanäle ausgegeben und beeinflussen den Arbeitszustand des zu steuernden Verbrennungsmotors.

Einflußfaktoren dieser geschilderten sog. kennfeldgesteuerten elektronischen Motorsteuergeräte sind z.B. Drehzahl, Lambda-Wert, Last, Lufttemperatur, Kühlwassertemperatur oder Öltemperatur. Zielgrößen sind in modernen elektronischen Motorsteuergeräten im allgemeinen das Drehmoment, die Katalysatortemperatur sowie die Abgastemperatur.

Moderne elektronische Motorsteuergeräte enthalten oftmals nicht nur ein Kennfeld, sondern mehrere Kennfelder, die beispielsweise je nach gewünschter Fahrweise oder Umgebungsbedingungen ausgewählt werden. Z. B. kann im Steuerprogramm des Motorsteuergerätes vorgesehen sein, daß während der Warmlaufphase des Motors ein Kennfeld A benutzt wird, während in der normalen Betriebsphase des Motors ein anderes Kennfeld B benutzt wird. Außerdem werden bei modernen elektronischen Motorsteuergeräten im Bemühen um weitere Verbesserungen bei Kraftstoffverbrauch, Laufruhe und Schadstoffemission immer mehr Einflußfaktoren erfaßt und für die Bestimmung des jeweiligen Kennfeld-Ausgangswertes herangezogen, so daß die in der bzw. den Speichereinheiten moderner elektronischer Motorsteuergeräte abzuspeichernden Kennfeldwerte ständig zunehmen. Die großen Kennfelder bedingen eine entsprechend hohe Speicherkapazität in den elektronischen Motorsteuergeräten. Da elektronische Motorsteuergeräte im Vergleich zu stationären elektronischen Speicher- und Recheneinheiten in rauhen Umgebungsbedingungen, nämlich unter enormer Temperatur-, Schwingungs- und Stoßbelastung arbeiten und bei ihnen über Jahre hinweg ein störungsfreier Betrieb gewährleistet sein muß, sind die verwendeten Speichereinheiten der elektronischen Motorsteuergeräte im Vergleich zu sonstigen elektronischen Speichereinheiten sehr kostspielig. Durch die hohen Anforderungen an die Speicherkapazität werden die elektronischen Motorsteuergeräte daher stark verteuert.

Es ist bereits ansatzweise versucht worden, die üblicherweise erforderliche große Speicherkapazität für die Speichereinheiten der elektronischen Motorsteuergeräte zu reduzieren. Die DE-OS 195 14 423 schlägt dazu ein Verfahren und eine Vorrichtung zur Erfassung des in einen Zylinder eines Verbrennungsmotors geführten Luftstromes vor, die so gestaltet sind, daß sie die Anzahl der Umdrehungen des Motors ermitteln, den Druck eines Ansaugrohres eines Motors ermitteln und den in einen Zylinder des Motors geführten Luftstrom $Qc$ berechnen, und zwar auf der Basis der Anzahl der Umdrehungen und des Druckes des Ansaugrohres gemäß einem linearen Ausdruck $Qc = \alpha * P + \beta$. Das Speichervolumen des benötigten Datenspeichers zur Speicherung der auf die Unterdruckwerte und die Motordrehzahlwerte bezogenen Korrekturen des volumetrischen Wirkungsgrades des Verbrennungsmotors wird dadurch im Vergleich zu demjenigen des ansonsten benötigten zweidimensionalen Kennfeldes verringert.

Jeder im Motorsteuerkennfeld eines elektronischen Motorsteuergerätes gespeicherte Wert wird zuvor experimentell in Testläufen an einem Testmotor auf einem Antriebsprüfstand gemessen. Moderne elektrische Motorsteuergeräte besitzen mehrdimensionale Kennfelder mit insgesamt tausenden oder zehntausenden verschiedener Werte, so daß sich für jeden zu vermessenden Motor-Getriebe-Typ entsprechend lange Meßzeiten auf einem Antriebsprüfstand zur Erfassung der für die Kennfelderstellung benötigten Meßwerte ergeben. Bei manuellem Prüfstandbetrieb betragen die Prüfstandzeiten üblicherweise Wochen bis Monate, und das für jeden einzelnen Motor-Getriebe-Typ.

Aus den Artikeln "Automatische Motormanagement-Abstimmung" von Franz Thomas Kampelmühler, erschienen in ATZ/MTZ Sonderheft Motor und Umwelt 1992, und "Verkürzung der Entwicklungszeiten für moderne Antriebe durch VEGA" von Jürgen Bredenbeck, Gerald Fehl und Hans-Peter Dohmen, erschienen in ATZ/MTZ Sonderausgabe System Partners 1997, sind Optimierungsstrategien für einen weitgehend automatisierten Meßablauf für Antriebsprüfstände zur Ermittlung der Kennfeldparameter bekannt. Diese optimierten Meßkonzepte erreichen durch ihre weitgehende Automatisierung zwar eine beträchtliche Verkürzung der Meßzeiten sowie eine deutliche Verringerung des Personalaufwandes; das Problem einer Vielzahl zu erfassender Meßwerte, die bis zu mehreren tausend oder zehntausend Meßwerten gehen können, wird dadurch aber nicht beseitigt Besonders deutlich wird dies in dem letztgenannten Artikel von Jürgen Bredenbeck, Gerald Fehl und Hans-Peter Dohmen, die bei einem Einsatz ihres automatisierten VEGA-Verfahrens zwar eine Reduktion des benötigten Personalaufwands gegenüber einer rein manuellen Prüfstandeinstellung und -erfassung der Meßwerte von 97 % angeben; die benötigte Prüfstandslaufzeit reduziert sich allerdings im Vergleich dazu nur um 43 %, so daß weiterhin eine beträchtliche Prüfstandslaufzeit notwendig bleibt.

Es besteht die Aufgabe, ein Verfahren zur Bestimmung von Kennfelddaten zur Kennfeldsteuerung eines Verbrennungsmotors sowie ein Verfahren zur Bestimmung von einem oder mehreren Parametern für eine oder mehrere mathematische Funktionen zur Steuerung eines Verbrennungsmotors derart zu verbessern, daß die bisher benötigten langen Meßzeiten auf Antriebsprüfständen reduziert werden. Es besteht weiterhin die Aufgabe, ein Verfahren zur Steuerung eines Verbrennungsmotors sowie ein elektronisches Motorsteuergerät zur Steuerung eines Verbrennungsmotors derart zu verbessern, daß die für das Verfahren benötigte Speicherkapazität bzw. die Speicherkapazität der Speichereinheit des elektronischen Motorsteuergerätes verringert werden kann.

Die genannten Aufgaben werden durch ein Verfahren mit den Merkmalen des Anspruchs 1 gelöst.

Vorteilhafte Weiterbildungen der Erfindung sind Gegenstand von Unteransprüchen.

Die Erfindung wird im folgenden modellhaft anhand eines einfachen Ausführungsbeispiels dargestellt, wobei das Ausführungsbeispiel anhand der folgenden beigefügten Abbildungen näher erläutert wird:

Abbildung 1:   Einfluß der Arbeitspunkte auf die Modellbildung;

Abbildung 2:   Abhängigkeiten der Ruß- und Stickoxidemissionen RUSSZ bzw. NOx von Einspritzbeginn SB, Ladedruck PL und Lufttemperatur im Saugrohr TL;

Abbildung 3:   Resultat unterschiedlicher Modellansätze für das Stickoxidemissions-Modell bei Berücksichtigung von 21 Funktionstermen;

Abbildung 4:   Wirkung der Haupteinflußfaktoren auf die Stickoxidemessionen NOx, mit 95 % Vertrauensintervall;

Abbildung 5:   Einfluß der Modellfunktionsterme auf die Stickoxidemession NOx;

Abbildung 6:   Stickoxidemession NOx in Abhängigkeit vom Kraftstoffeinspritzbeginn SB und Ladedruck PL, mit 95 % Vertrauensintervall;

Abbildung 7:   berechnetes Kennfeld für den Kraftstoffdurchsatz KRSTDS, die Stickoxid- und die Rußemissionen NOx bzw. RUSSZ in Abhängigkeit vom Ladedruck PL und Einspritzbeginn SB;

Abbildung 8:   zusammenfassende schematische Darstellung des Prinzips der erfinderischen Lösung einer beschleunigten Kennfeldwert- und Parameterwertermittlung.

Im folgenden wird nunmehr ein Versuchsablauf zur Bestimmung von mehreren Parametern mathematischer Funktionen bzw. zur Bestimmung von Kennfelddaten für einen Diesel-Verbrennungsmotor geschildert. Der Dieselmotor ist mit direkter Kraftstoffeinspritzung und einem Abgasturbolader mit Ladeluftkühler und variabler Turbinengeometrie und daher variablem mittlerem Ladedruck PL ausgerüstet. Die Versuchsmessungen laufen auf einem an sich bekannten Antriebsprüfstand ab.

Die Messungen sind zur Beantwortung der Frage geplant, wie sich die experimentell kontrollierbaren Einflußfaktoren Abgasrückführrate AGR, mittlerer Ladedruck PL und Kraftstoffeinspritzbeginn SB auf die Zielgrößen Kraftstoffverbrauch (Kraftstoffdurchsatz) KRSTDS, Rußemessionen (Rußzahl) RUSSZ und Stickoxidemessionen NOx auswirken. Zur Vereinfachung der Versuchsbedingungen sollen die Motordrehzahl DRZ bei konstant DRZ = 2000 min$^{-1}$, der Ladedruck PL bei konstant PL = 2 bar sowie das Drehmoment MD bei konstant MD = 30 Nm gehalten werden. Zusätzlich wird als weiterer, experimentell nicht kontrollierbarer Einflußfaktor die Lufttemperatur im Saugrohr vor dem Einlaßventil TL gemessen. Darüber hinaus wird außerdem die Lufttemperatur am Ausgang des Ladeluftkühlers TLAD als vielleicht mögliche weitere, experimentell nicht kontrollierbare Einflußgröße mit erfaßt.

Vor Versuchsbeginn wird festgelegt, daß für die kontrollierbaren Einflußfaktoren im Versuch folgende Werte eingestellt werden sollen, die sich aus der nachfolgenden Tabelle 1 ergeben.

Tabelle 1:

| Liste der vor Versuchsbeginn im Modellansatz berücksichtigten Einflußfaktoren | | | |
| --- | --- | --- | --- |
| Faktor | Abkürzung | Werte | Einheit |
| Kraftstoffeinspritzbeginn | SB | -15, -13, -11 -9, -7, -5, -3 | Kurbelwinkelgrade (°KW) vor oberem Totpunkt |
| mittlerer Ladedruck | PL | 1050, 1080, 1120, 1150 | mbar |

Tabelle 1: (fortgesetzt)

| Liste der vor Versuchsbeginn im Modellansatz berücksichtigten Einflußfaktoren | | | |
|---|---|---|---|
| Faktor | Abkürzung | Werte | Einheit |
| Stellsignal für Abgasrückführungsventil | AGR | keine, gering, mittel, viel, maximal | |
| Lufttemperatur vor dem Einflußventil | TL | unkontrolliert | °C |

Es sollen somit für den Kraftstoffeinspritzbeginn SB 7 mögliche Werte, für den mittleren Ladedruck PL 4 mögliche Werte und für das Stellsignal des Abgasrückführungsventils 5 mögliche Stufen eingestellt werden. Es konnte vor dem Versuch keine klare Auskunft darüber gegeben werden, wie das Stellsignal für das Abgasrückführungsventil einzustellen ist, um eine definierte Abgasrückführungsrate AGR zu erhalten. Aus diesem Grunde wurden zunächst die qualitativen Angaben "keine, gering, mittel, viel, maximal" gewählt. Während der Messungen wurde für jedes der 5 möglichen Stellsignale für das Abgasrückführungsventil die sich experimentell ergebende Abgasrückführungsrate AGR gemessen, so daß nach Abschluß der Messungen den qualitativen Angaben für das Stellsignal des Abgasrückführungsventils eine quantitative Abgasrückführrate AGR zugeordnet werden konnte. Diese quantitative Abgasrückführungsrate AGR wird anschließend der Auswertung der Messungen zugrundegelegt. Diese Vorgehensweise ist möglich, sie erhöht lediglich den erforderlichen Meßaufwand, da nun bei der Festlegung der Arbeitspunkte im Arbeitsplan für die Messungen alle 5 möglichen Stufen des Stellsignals des Abgasrückführungsventils berücksichtigt werden müssen, um entsprechende quantitative Abgasrückführungsraten AGR zu gewinnen.

Wie bereits vor Versuchsbeginn vermutet wurde, hat die Temperatur der Luft im Saugrohr vor dem Einlaßventil TL tatsächlich - wie sich dann zeigte - einen nicht vernachlässigbaren Einfluß auf die Zielgrößen. Da sie andererseits aber im Versuch nicht exakt vorgegeben werden kann, wird sie bereits vor Versuchsbeginn im Modellansatz als Einflußfaktor berücksichtigt, der aber nicht experimentell kontrollierbar ist. Auf diese Weise werden die Temperatureinflüsse TL in den Modellansatz für den Versuchsmotor mit einbezogen.

Die 3 experimentell kontrollierbaren Einflußfaktoren Kraftstoffeinspritzbeginn SB, Ladedruck PL und Abgasrückführrate AGR erzeugen einen Werteraum mit 3 Dimensionen und $7 * 4 * 5 = 140$ Wertepunkten. Beim bekannten Stand der Technik hätten alle diese 140 Wertepunkte einzeln als Arbeitspunkte auf dem Antriebsprüfstand angefahren und durchgemessen werden müssen. Statt dessen gilt es erfindungsgemäß, aus diesen 140 möglichen Wertepunkten wesentliche Punkte als Arbeitspunkte für die Messungen auf dem Antriebsprüfstand auszuwählen.

Grundsätzlich gilt, daß bei dieser Auswahl der Arbeitspunkte die verschiedenen möglichen Werte der verschiedenen Einflußfaktoren möglichst gleichmäßig berücksichtigt werden sollten, um eine Im wesentlichen gleichmäßige Verteilung der Arbeitspunkte im Werteraum zu erreichen. Eine übermäßige Massierung von Arbeitspunkten in einem bestimmten Gebiet des zur Verfügung stehenden Werteraums fördert Fehler und Ungenauigkeiten bei der statistischen Auswertung der erhaltenen Meßdaten an den Arbeitspunkten. Außerdem gilt, daß man Extremwerte, d. h. möglichst kleine und möglichst große Werte der Einflußfaktoren, bevorzugt in die Messungen mit einbeziehen wird, da bekanntermaßen Interpolationsverfahren zwischen zwei Wertepunkten üblicherweise mit geringeren numerischen Fehlern und Streuungen behaftet sind als Extrapolationsverfahren.

Die Auswahl von Wertepunkten als Arbeitspunkte für die durchzuführenden Messungen kann unter Berücksichtigung dieser Maximen von Hand geschehen, sie kann aber auch einer universellen Meßplanungs-, Datenanalyse und -auswertungssoftware überlassen werden. Im Ausführungsbeispiel kamen dazu die kommerziell erhältlichen, universellen Meßplanungs-, datenanalyse und -auswertungssoftwarewerkzeuge RS/1 Discover und RS/1 Explore zum Einsatz.

Als unabdingbare Voraussetzung bei der Auswahl der Arbeitspunkte muß lediglich berücksichtigt werden, daß die Anzahl der aufzunehmenden Meßwerte mindestens gleich der maximalen Anzahl der in einer verwendeten Zielgrößenfunktion vorkommenden Parameter ist. Für die drei Zielgrößen Kraftstoffverbrauch KRSTDS, Rußemession RUSSZ und Stickoxidemession NOx wurde als mathematischer Modellansatz jeweils ein quadratisches Polynom gewählt. Bei 4 Variablen (nämlich den 3 kontrollierbaren Einflußfaktoren Abgasrückführung AGR, Ladedruck PL und Kraftstoffeinspritzbeginn SB sowie dem nicht kontrollierbaren Einflußfaktor Lufttemperatur vor dem Einlaßventil TL) bedeutet dies unter Berücksichtigung der linearen und quadratischen Terme sowie aller einfachen Produkte ein Modell mit 15 Funktionstermen entsprechend der Tabelle 2.

| 1 | SB | PL | AGR | TL | SB*PL | SB*AGR | SB*TL | PL*TL | PL*AGR | AGR*TL |
|---|----|----|-----|----|-------|--------|-------|-------|--------|--------|
| $SB^2$ | $PL^2$ | $AGR^2$ | $TL^2$ | | | | | | | |

*Tabelle 2: Die 15 Modellterme*

Die der Auswertung der Ergebnisse gemäß vorangehender Versuchsplanung zugrundeliegende Formel lautet somit für die Stickoxidemissionen NOx:

$$NOx = a_0 + a_{SB} * SB + a_{PL} * PL + a_{AGR} * AGR + a_{TL} * TL + a_{SB.PL} * SB * PL$$

$$+ a_{SB.AGR} * SB * AGR + a_{PL.AGR} * PL * AGR + a_{TL.SB} * TL * SB$$

$$+ a_{TL.PL} * TL * PL + a_{TL.AGR} * TL * AGR + a_{SB^2} * SB^2 + a_{PL^2} * PL^2$$

$$+ a_{AGR^2} * AGR^2 + a_{TL^2} * TL^2;$$

für die Russemissionen (Russzahl) RUSSZ:

$$RUSSZ = b_0 + b_{SB} * SB + b_{PL} * PL + b_{AGR} * AGR + b_{TL} * TL + b_{SB.PL} * SB * PL$$

$$+ b_{SB.AGR} * SB * AGR + b_{PL.AGR} * PL * AGR + b_{TL.SB} * TL * SB$$

$$+ b_{TL.PL} * TL * PL + b_{TL.AGR} * TL * AGR + b_{SB^2} * SB^2 + b_{PL^2} * PL^2$$

$$+ b_{AGR^2} * AGR^2 + b_{TL^2} * TL^2$$

und für den Kraftstoffverbrauch (Kraftstoffdurchsatz) KRSTDS:

$$KRSTDS = c_0 + c_{SB} * SB + c_{PL} * PL + c_{AGR} * AGR + c_{TL} * TL + c_{SB.PL} * SB * PL$$

$$+ c_{SB.AGR} * SB * AGR + c_{PL.AGR} * PL * AGR + c_{TL.SB} * TL * SB$$

$$+ c_{TL.PL} * TL * PL + c_{TL.AGR} * TL * AGR + c_{SB^2} * SB^2 + c_{PL^2} * PL^2$$

$$+ c_{AGR^2} * AGR^2 + C_{TL^2} * TL^2$$

Da gemäß Modellansatz jede der drei zu bestimmenden Zielgrößenfunktionen jeweils 15 Parameter enthält, die drei Zielgrößen Kraftstoffverbrauch KRSTDS, Rußemession RUSSZ und Stickoxidemession NOx aber gemäß Modellansatz als voneinander unabhängig angenommen sind, genügen grundsätzlich 15 Arbeitspunkte zur Bestimmung der $3 * 15 = 45$ Parameter $a_x$, $b_x$ und $c_x$, sofern an jedem der 15 Arbeitspunkte jeweils Meßwerte für alle vier oben angegebenen Einflußfaktoren sowie Meßwerte für alle drei Zielgrößen (also insgesamt $15 * [4 + 3] = 105$ Meßwerte) gemessen werden. Die 45 Parameter $a_x$, $b_x$ und $c_x$ könnten dann mittels an sich bekannter numerischer Methoden der Linearen Algebra (Auflösung eines linearen Gleichungssystems) aus den Meßwerten bestimmt werden.

Wegen der zunächst lediglich qualitativen Vorgabe der Einstellwerte für das Abgasrückführungsventil müssen aber für die Abgasrückführungsrate AGR alle 5 möglichen Einstellstufen berücksichtigt werden. Außerdem ist es wünschenswert, mehr Arbeitspunkte als zur Berechnung der Parameter unbedingt notwendig festzulegen, um auf diese Weise bei der Auswertung der Meßergebnisse statistische Ausgleichsverfahren anwenden zu können und so die Genauigkeit der Ergebnisse zu erhöhen. Es wird daher für die Messungen ein Arbeitsplan mit 23 Arbeitspunkten gemäß folgender Tabelle 3 festgelegt.

Tabelle 3:

| Arbeitsplan für Motordrehzahl DRZ = 2000 min⁻¹ und Ladedruck PL =2 bar | | | |
|---|---|---|---|
| Arbeitspunkt | Einspritzbeginn SB | Ladedruck PL | AGR-Rate AGR |
| Nr. | $\underline{o}$KW | mbar | |
| 1 | -15 | 1150 | viel |
| 2 | -15 | 1050 | keine |
| 3 | -15 | 1050 | mittel |
| 4 | -3 | 1050 | mittel |
| 5 | -3 | 1080 | gering |
| 6 | -15 | 1150 | keine |
| 7 | -3 | 1120 | maximal |
| 8 | -3 | 1050 | viel |
| 9 | -3 | 1050 | maximal |
| 10 | -15 | 1150 | mittel |
| 11 | -3 | 1150 | viel |
| 12 | -3 | 1150 | mittel |
| 13 | -15 | 1050 | gering |
| 14 | -9 | 1080 | viel |
| 15 | -15 | 1150 | maximal |
| 16 | -3 | 1150 | gering |
| 17 | -15 | 1050 | viel |
| 18 | -15 | 1150 | gering |
| 19 | -7 | 1150 | maximal |
| 20 | -3 | 1150 | keine |
| 21 | -15 | 1050 | maximal |
| 22 | -7 | 1050 | gering |
| 23 | -3 | 1050 | keine |

Anschließend werden gemäß des Arbeitsplanes die verschiedenen Einstellwerte gemäß den 23 Arbeitspunkten für die kontrollierbaren Einflußfaktoren in an sich bekannter Weise am Antriebsprüfstand eingestellt. Die tatsächlich am Prüfstand eingestellten und gemessenen Werte der kontrollierbaren und nicht kontrollierbaren Einflußfaktoren sind in der Tabelle 4 zusammengefaßt.

Tabelle 4:

| Am Prüfstand gemessene Werte der Einflußfaktoren | | | | | | | | |
|---|---|---|---|---|---|---|---|---|
| Arbeitspunkt | Einspritzbeginn SB | Ladedruck PL | AGR-Rate AGR | AGR-Rate AGR | Lufttemperatur am Ladeluftkühlerausgang TLAD | Lufttemperatur vor dem Einlaßventil TL | Drehzahl DRZ | Drehmoment MD |
| Nr. | °KW | mbar | | % | °C | °C | min$^{-1}$ | Nm |
| 1 | -15 | 1150 | viel | 50 | 35,07 | 47,22 | 2000 | 29,2 |
| 2 | -15 | 1050 | keine | 80 | 36,41 | 40,59 | 2000 | 30,6 |
| 3 | -15 | 1050 | mittel | 60 | 34,1 | 38,65 | 2000 | 31,5 |
| 4 | -3 | 1050 | mittel | 60 | 33,16 | 38,24 | 2000 | 30,2 |
| 5 | -3 | 1080 | gering | 70 | 33,63 | 38,61 | 2000 | 30,8 |
| 6 | -15 | 1150 | keine | 80 | 36,62 | 39,54 | 2000 | 30,8 |
| 7 | -3 | 1120 | maximal | 40 | 36,12 | 65,31 | 2000 | 28,8 |
| 8 | -3 | 1050 | viel | 50 | 35,9 | 51,62 | 1999 | 30,9 |
| 9 | -3 | 1050 | maximal | 40 | 34,01 | 57,73 | 1999 | 30,4 |
| 10 | -15 | 1150 | mittel | 60 | 36,99 | 42,99 | 2000 | 30,7 |
| 11 | -3 | 1150 | viel | 50 | 37,79 | 46,08 | 2003 | 30,2 |
| 12 | -3 | 1150 | mittel | 60 | 38,81 | 42,9 | 2004 | 30,7 |
| 13 | -15 | 1050 | gering | 75 | 34,89 | 39,2 | 2004 | 29,6 |
| 14 | -9 | 1080 | viel | 51 | 34,42 | 40,88 | 2004 | 30,8 |
| 15 | -15 | 1115 | maximal | 40 | 35,27 | 74,17 | 2004 | 29,5 |
| 16 | -3 | 1150 | gering | 70 | 38,03 | 42,82 | 2003 | 29,2 |
| 17 | -15 | 1050 | viel | 50 | 36,54 | 43,16 | 2003 | 31,3 |
| 18 | -15 | 1147 | gering | 70 | 38,21 | 40,5 | 2003 | 30,5 |
| 19 | -7 | 1118 | maximal | 40 | 36,94 | 75,11 | 2003 | 29,5 |
| 20 | -3 | 1150 | keine | 80 | 39,32 | 42,38 | 2004 | 30,5 |
| 21 | -15 | 1054 | maximal | 40 | 36,42 | 60,13 | 2003 | 30,4 |

EP 1 075 594 B1

Tabelle 4: (fortgesetzt)

| Am Prüfstand gemessene Werte der Einflußfaktoren | | | | | | | | |
|---|---|---|---|---|---|---|---|---|
| Arbeitspunkt | Einspritzbeginn SB | Ladedruck PL | AGR-Rate AGR | AGR-Rate AGR | Lufttemperatur am Ladeluftkühlerausgang TLAD | Lufttemperatur vor dem Einlaßventil TL | Drehzahl DRZ | Drehmoment MD |
| Nr. | °KW | mbar | | % | °C | °C | min-1 | Nm |
| 22 | -7 | 1050 | gering | 70 | 35,86 | 40,83 | 2003 | 30,1 |
| 23 | -3 | 1053 | keine | 80 | 35,2 | 39,84 | 2003 | 29,8 |

EP 1 075 594 B1

Nach Abschluß der Messungen werden den qualitativen Begriffen für das Stellsignal des Abgasrückführungsventils quantitative Abgasrückführungsraten AGR zugeordnet. Die Zuordnung ist aus Tabelle 4 ersichtlich.

Aus der Tabelle 4 wird weiterhin deutlich, daß der mittlere Ladedruck PL nicht an allen Arbeitspunkten entsprechend der Vorgabe des Arbeitsplanes (nämlich konstant bei PL = 2 bar) eingestellt werden konnte - vergleiche z. B. die Arbeitspunkte Nr. 15 und Nr. 19. Dieses ist aber für die weitere Analyse nicht kritisch. Wichtig ist lediglich, daß die weitere Analyse und Auswertung nur mit den tatsächlich eingestellten Daten für den Ladedruck PL durchgeführt wird und nicht mit den zuvor geplanten.

Die Ergebnisse der Tabelle 4 zeigen außerdem, daß nicht nur - wie erwartet - erhebliche Variationen der Lufttemperatur im Saugrohl TL aufgetreten sind. Vielmehr wurden auch starke Schwankungen des Drehmoments MD beobachtet. Auch das Drehmoment MD konnte mithin entgegen der Vorgabe des Arbeitsplans nicht an allen Arbeitspunkten auf konstant MD = 30 Nm eingestellt werden. Die ebenfalls zur Kontrolle mitgemessene Lufttemperatur am Ladeluftkühlerausgang TLAD zeigte hingegen nur sehr geringe Schwankungen.

Eine nennenswerte Wirkung der Schwankungen des Drehmoments MD auf die verwendeten Modellansätze ist nicht auszuschließen. Daher wird der Modellansatz um die 6 Terme MD, $MD^2$, MD∗SB, MD∗PL, MD∗AGR und MD∗TL auf 15 + 6 = 21 Terme erweitert. Da insgesamt 23 Arbeitspunkte vermessen wurden, kann ein Modellansatz mit 21 Termen noch berechnet werden.

Die der tatsächlichen Auswertung der Versuchsergebnisse zugrundeliegende Formel lautet somit beispielsweise für die Stickoxidemissionen NOx:

$$NOx = a_0 + a_{SB} * SB + a_{PL} * PL + a_{AGR} * AGR + a_{TL} * TL + a_{MD} * MD$$

$$+ a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR$$

$$+ a_{MD.SB} * MD * SB + a_{MD.PL} * MD * PL + a_{MD.AGR} * MD * AGR$$

$$+ a_{MD.TL} * MD * TL + a_{SB^2} * SB^2 + a_{PL^2} * PL^2 + a_{AGR^2} * AGR^2$$

$$+ a_{TL^2} * TL^2 + a_{MD^2} * MD^2$$

Die Meßwerte für die drei Zielgrößen Kraftstoffverbrauch KRSTDS, Rußemission RUSSZ und Stickoxidemission NOx an den 23 Arbeitspunkten auf dem Antriebprüfstand sind in der folgenden Tabelle 5 dargestellt.

Tabelle 5:

| Am Prüfstand gemessene zielgrößen (RUSSZ = Rußzahl, NOx = Stickoxide in ppm, KRSTDS = Kraftstoffdurchsatz in kg/h, AROIST = Luftdurchsatz in kg/h aus dem Signal des Heißfilmsensors) | | | | |
|---|---|---|---|---|
| Arbeitspunkt | Russzahl RUSSZ | Stickoxide NOx | Kraftstoffverbrauch KRSTDS | Luftdurchsalz AROIST |
| Nr. | 1 | ppm | kg/h | kg/h |
| 1 | 0,305 | 372 | 2,07 | 111 |
| 2 | 0,285 | 429 | 2,03 | 120 |
| 3 | 0,295 | 429 | 2,13 | 120 |
| 4 | 0,695 | 155 | 2,18 | 121 |
| 5 | 0,675 | 157 | 2,16 | 123 |
| 6 | 0,255 | 394 | 2,12 | 131 |
| 7 | 1,602 | 90 | 2,23 | 77 |
| 8 | 0,915 | 150 | 2,19 | 106 |
| 9 | 1,103 | 124 | 2,18 | 89 |
| 10 | 0,275 | 389 | 2,09 | 127 |

Tabelle 5: (fortgesetzt)

| Am Prüfstand gemessene zielgrößen (RUSSZ = Rußzahl, NOx = Stickoxide in ppm, KRSTDS = Kraftstoffdurchsatz in kg/h, AROIST = Luftdurchsatz in kg/h aus dem Signal des Heißfilmsensors) | | | | |
|---|---|---|---|---|
| Arbeitspunkt | Russzahl RUSSZ | Stickoxide NOx | Kraftstoffverbrauch KRSTDS | Luftdurchsalz AROIST |
| Nr. | 1 | ppm | kg/h | kg/h |
| 11 | 0,825 | 146 | 2,3 | 116 |
| 12 | 0,725 | 151 | 2,3 | 129 |
| 13 | 0,255 | 414 | 1,97 | 120 |
| 14 | 0,725 | 207 | 2,16 | 115 |
| 15 | 1,335 | 189 | 2,17 | 71 |
| 16 | 0,735 | 149 | 2,14 | 131 |
| 17 | 0,365 | 396 | 2,07 | 109 |
| 18 | 0,265 | 394 | 2,11 | 130 |
| 19 | 2,66 | 85 | 2,23 | 70 |
| 20 | 0,755 | 153 | 2,25 | 131 |
| 21 | 0,665 | 304 | 2,09 | 82 |
| 22 | 0,765 | 186 | 2,25 | 120 |
| 23 | 0,655 | 156 | 2,22 | 121 |

Die drei Zielgrößen wurden am Antriebsprüfstand jeweils in an sich in bekannter Weise gemessen. Außerdem wurde mittels eines Heißfilmsensors zusätzlich der Luftdurchsatz AROIST erfaßt.

Die statistische Analyse und Darstellung der Meßergebnisse geschieht in an sich bekannter Weise ebenfalls mittels der komerziell erhältlichen, universellen Meßplanungs-, -datenanalyse und -auswertungssoftwarewerkzeuge RS/1 Discover und RS/1 Explore.

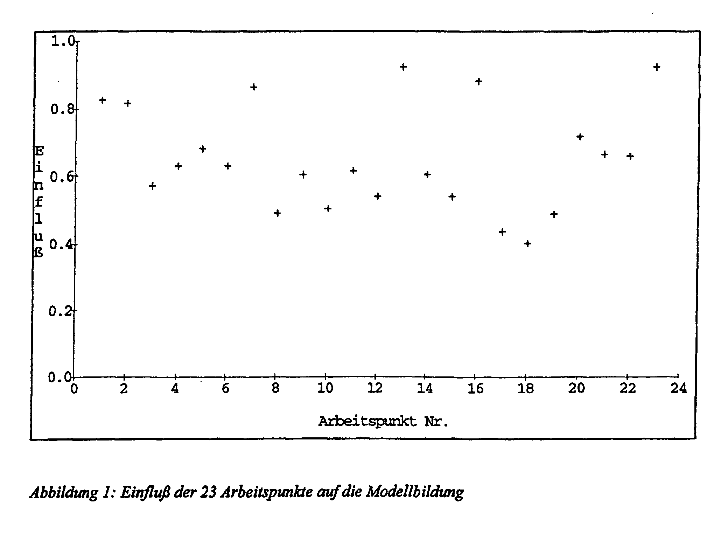

Eine statistische Betrachtung der Gewichtung der Meßergebnisse zeigt, daß alle 23 Arbeitspunkte einen wesentlichen Einfluß auf die Modellbildung ausüben (Abb. 1).

Einen Überblick über die Abhängigkeiten zwischen den einzelnen Größen liefert eine lineare Korrelationsanalyse, deren Ergebnis in Tabelle 6 dargestellt ist. Folgende Abhängigkeiten lassen sich z.B. aus der Tabelle 6 ermitteln:

Der Einspritzbeginn SB korreliert geringfügig mit dem Drehmoment MD und stark mit den Stickoxidemissionen NOx und dem Verbrauch KRSTDS. Durch den Ladedruck PL wird das Drehmoment MD, die Temperatur am Ausgang des Ladeluftkühlers TLAD und der Verbrauch KRSTDS beeinflußt. Die Abgasrückführung AGR, das Drehmoment MD und die Saugrohrlufttemperatur TL korrelieren mit allen Zielgrößen. Die konkreten Abhängigkeiten werden in der nachfolgenden Modellanalyse ermittelt.

Tabelle 6:

| Lineare Korrelationsanalyse der Variablen (aus 23 von 23 Arbeitspunkten) | | | | | | | | | |
|---|---|---|---|---|---|---|---|---|---|
| | SB | PL | AGR | MD | TLAD | TL | KRSTDS | NOx | RUSSZ |
| SB | 1.000 | 0.030 | -0.026 | -0.197 | 0.048 | 0.027 | 0.766 | -0.796 | 0.435 |
| PL | 0.030 | 1.000 | 0.039 | -0.288 | 0.663 | 0.095 | 0.265 | 0.009 | 0.081 |
| AGR | -0.026 | 0.039 | 1.000 | 0.189 | 0.184 | -0.764 | -0.184 | 0.471 | -0.569 |
| MD | -0.197 | -0.288 | 0.189 | 1.000 | -0.041 | -0.477 | -0.090 | 0.425 | -0.464 |
| TLAD | 0.048 | 0.663 | 0.184 | -0.041 | 1.000 | 0.031 | 0.269 | 0.047 | 0.040 |
| TL | 0.027 | 0.095 | -0.764 | -0.477 | 0.031 | 1.000 | 0.219 | -0.566 | 0.818 |
| | | | | | | | | | |
| KRSTDS | 0.766 | 0.265 | -0.184 | -0.090 | 0.269 | 0.219 | 1.000 | -0.721 | 0.533 |
| NOx | -0.796 | 0.009 | 0.471 | 0.425 | 0.047 | -0.566 | -0.721 | 1.000 | -0.780 |

Tabelle 6: (fortgesetzt)

| | SB | PL | AGR | MD | TLAD | TL | KRSTDS | NOx | RUSSZ |
|---|---|---|---|---|---|---|---|---|---|
| _Lineare Korrelationsanalyse der Variablen (aus 23 von 23 Arbeitspunkten)_ | | | | | | | | | |
| RUSSZ | 0.435 | 0.081 | -0.569 | -0.464 | 0.040 | 0.818 | 0.533 | -0.780 | 1.000 |
| Werte sind signifikant verschieden von 0 (mit 95 % wenn sie in absoluten Zahlen größer als 0.413 | | | | | | | | | |

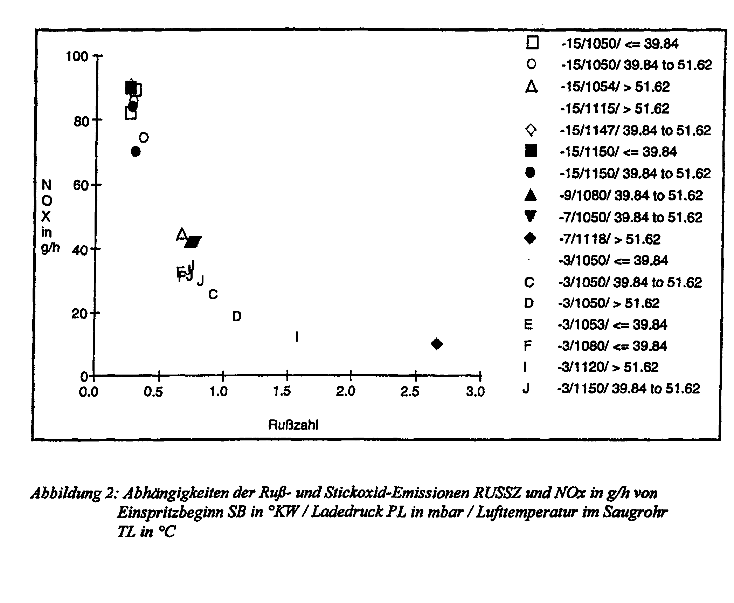

In der Abbildung 2 werden die Meßwerte bezüglich der Zielgrößen Stickoxidemission NOx und Russemission (Russzahl) RUSSZ in Abhängigkeit von den Einflußfaktoren Einspritzbeginn SB, Ladedruck PL und Saugrohrlufttemperatur TL dargestellt. Es ist zu erkennen, daß die optimalen Werte für die gleichzeitige Minimierung beider Größen mit einem Einspritzbeginn SB von -3 °KW erreicht werden. Eine exaktere Analyse kann aus den Modellen entwickelt werden.

Die weitere Auswertung wird im folgenden anhand der Zielgröße Stickoxidemission NOx gezeigt. Die Auswertung verläuft für die beiden anderen Zielgrößen Kraftstoffverbrauch KRSTDS und Russemission (Russzahl) RUSSZ analog.

Der Auswertung der Versuchsergebnisse für die Stickoxidemissionen NOx liegt wie oben angegeben folgende Formel zugrunde:

$$NOx = a_0 + a_{SB} * SB + a_{PL} * PL + a_{AGR} * AGR + a_{TL} * TL + a_{MD} * MD$$

$$+ a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR$$

$$+ a_{MD.SB} * MD * SB + a_{MD.PL} * MD * PL + a_{MD.AGR} * MD * AGR$$

$$+ a_{MD.TL} * MD * TL + a_{SB^2} * SB^2 + a_{PL^2} * PL^2 + a_{AGR^2} * AGR^2$$

$$+ a_{TL^2} * TL^2 + a_{MD^2} * MD^2$$

Es handelt sich hierbei um ein quadratisches Polynom mit fünf Variablen, nämlich dem Kraftstoffeinspritzbeginn SB, dem mittleren Ladedruck PL, der Abgasrückführrate AGR, der Lufttemperatur im Saugrohr vor dem Einlaßventil TL und dem Drehmoment MD. Die mathematische Funktion enthält insgesamt 21 Terme und dementsprechend 21 freie Parameter, nämlich die Koofizienten $a_x$ des quadratischen Polynoms.

Zur besseren Vergleichbarkeit der Größe der zu ermitelnden Werte für die 21 Parameterkoofizienten $a_x$ und damit der Bedeutung der verschiedenen Variablen werden die Werte der Variablen der Polynomfunktion für die Stickoxidemission NOx jeweils auf einen einheitlichen Wertbereich transformiert und normiert, und zwar in dem der jeweils kleinste eingestellte Einstellwert $f_{min}$ gleich -1 gesetzt wird und der jeweils größte eingestellte $f_{max}$ auf +1 gesetzt wird. Beispielsweise wird beim Ladedruck PL der kleinste gemessene Einstellwert von PL = 1050 mbar gleich -1 gesetzt, während der größte gemessene Einstellwert von PL = 1150 mbar gleich +1 gesetzt wird. Dementsprechend wird die kleinste gemessene Abgasrückführungsrate AGR von AGR = 40 % gleich -1 gesetzt, während die größte gemessene Abgasrückführungsrate von AGR = 80 % gleich +1 gesetzt wird. Diese normierende Transformation erleichtert wie angegeben den Vergleich der Bedeutung der einzelnen Terme für das Zielgrößenergebnis NOx, da der numerische Wert der ermittelten Polynomkoeffizienten dann deren Bedeutung für das Zielgrößenergebnis direkt widerspiegelt. Die Auswertung kann aber auch selbstverständlich ohne eine solche normierende Transformation vorgenommen werden. Die Transformation muß auch nicht für alle Variablen vorgenommen werden; im Ausführungsbeispiel wurde beipielsweise für den Einflußfaktor Lufttemperatur vor dem Einlaßventil TL und dessen Quadrat TL[2] darauf verzichtet (vergleiche Tabellen 7 und 8).

Die Anpassung der einzelnen 21 Parameter der verwendeten Polynomfunktion an die Ergebnisse in den 23 Arbeitspunkten geschah mittels eines bekannten statistischen Auswerteverfahrens, nämlich mittels des bekannten Verfahrens der kleinsten Quadrate anhand einer Regressionsgerade. Dazu wurden wiederum die kommerziell erhältlichen, universellen Meßplanungs-, -datenanalyse und -auswertungssoftwarewerkzeuge RS/1 Discover und RS/1 Explore verwendet. Die Tabelle 7 zeigt den vollständigen Modellansatz mit allen 21 ermittelten Parameterkoeffizienten der 21 Terme des für die Stickoxidemission NOx verwendeten quadratischen Polynom-Ansatzes.

Tabelle 7:

| Vollständiges Modell für den Massenstrom der Stickoxidemission | | | | | |
| --- | --- | --- | --- | --- | --- |
| Koeffizienten für LS, Zielgröße NOX, | | | | | |
| | Term | Koeff. $a_x$ | Std.abw. | T-Wert | Signif. |
| 1 | 1 | 116.836004 | 89.633137 | 1.30 | 0.3223 |
| 2 | ~SB | -55.133720 | 5.604357 | -9.84 | 0.0102 |
| 3 | ~PL | 22.144801 | 27.824673 | 0.80 | 0.5096 |
| 4 | ~AGR | 1.167346 | 49.049756 | 0.02 | 0.9832 |
| 5 | ~MD | 20.140600 | 27.008276 | 0.75 | 0.5336 |
| 6 | ~SB*PL | -0.582767 | 0.583164 | -1.00 | 0.4229 |
| 7 | ~SB*AGR | 1.074790 | 1.319033 | 0.81 | 0.5008 |
| 8 | ~SB*MD | -0.450068 | 1.425292 | -0.32 | 0.7821 |
| 9 | ~PL*AGR | -2.758707 | 2.443391 | -1.13 | 0.3761 |
| 10 | ~PL*MD | -2.112677 | 2.151024 | -0.98 | 0.4296 |
| 11 | ~AGR*MD | -0.446591 | 4.643464 | -0.10 | 0.9321 |
| 12 | -SB**2 | 9.256800 | 2.377801 | 3.89 | 0.0601 |
| 13 | -PL**2 | 6.575369 | 3.261768 | 2.02 | 0.1814 |
| 14 | ~AGR**2 | -4.224712 | 3.401141 | -1.24 | 0.3401 |
| 15 | ~MD**2 | -3.627114 | 3.457786 | -1.05 | 0.4043 |
| 16 | ~TL | -2.425010 | 3.837210 | -0.63 | 0.5920 |
| 17 | ~TL**2 | 0.015405 | 0.040613 | 0.38 | 0.7410 |
| 18 | ~TL*SB | 0.716589 | 0.117707 | 6.09 | 0.0259 |
| 19 | ~TL*PL | -0.444439 | 0.653277 | -0.68 | 0.5665 |
| 20 | ~TL*AGR | 0.096197 | 1.086991 | 0.09 | 0.9375 |
| 21 | ~TL*MD | -0.372205 | 0.597656 | -0.62 | 0.5970 |

Es wird insbesondere aus der letzten Spalte (Signifikanz) deutlich, daß viele Terme keine Bedeutung für die NOx-Emission haben. Die Terme mit T-Werten kleiner 1 können eliminiert, das heißt aus der der Auswertung zugrundeliegenden Polynomfunktionsformel weggelassen werden. Dieses sollte jedoch in einzelnen Schritten - beginnend mit dem Term jeweils kleinster Signifikanz - erfolgen, da nach jedem Entfernen eines Terms die Signifikanz der übrigen sich aufgrund der veränderten, der statistischen Anpassung zugrundeliegenden Polynomfunktionsformel neu berechnet. Da aufgrund der 23 Arbeitspunkte zwei Meßwerte mehr vorliegen, als zur Bestimmung der 21 Polynomkoofizienten notwendig sind, werden in an sich bekannter Weise innerhalb des Auswerteprogramms statistische Ausgleichsmethoden eingesetzt.

Werden alle Polynomterme, die keinen signifikanten Einfluß auf die Stickoxidemission NOx ausüben, aus dem vollständigen Modellansatz gemäß Tabelle 7 entfernt, bleiben noch zehn signifikante Terme übrig. Diese zehn signifikanten Terme sind in der folgenden Tabelle 8 dargestellt.

Tabelle 8:

| Modell für die Stickoxidemissionen NOx mit allen signifikanten Termen | | | | |
| --- | --- | --- | --- | --- |
| Koeffizienten für LS, zielgröße NOX | | | | |
| Term | Koeff. $a_x$ | Std.abw. | T-wert | Signif. |
| 1 1 | 72.478644 | 4.803930 | 15.09 | 0.0001 |
| 2 ~SB | -51.674042 | 1.931396 | -26.75 | 0.0001 |
| 3 ~PL | 1.812678 | 0.460408 | 3.94 | 0.0017 |
| 4 ~AGR | 6.898174 | 1.196411 | 5.77 | 0.0001 |
| 5 ~MD | 2.554958 | 0.665147 | 3.84 | 0.0020 |
| 6 ~SB**2 | 8.185808 | 1.341441 | 6.10 | 0.0001 |
| 7 ~PL**2 | 4.212964 | 1.419855 | 2.97 | 0.0109 |
| 8 ~AGR**2 | -4.938841 | 1.577394 | -3.13 | 0.0080 |

Tabelle 8:   (fortgesetzt)

| Modell für die Stickoxidemissionen NOx mit allen signifikanten Termen | | | | |
|---|---|---|---|---|
| Koeffizienten für LS, zielgröße NOX | | | | |
| Term | Koeff. $a_x$ | Std.abw. | T-wert | Signif. |
| 9 ~TL | -0.676348 | 0.101358 | -6.67 | 0.0001 |
| 10 ~TL*SB | 0.635087 | 0.040353 | 15.74 | 0.0001 |

Die ermittelte Formel für die Stickoxidemission NOx reduziert sich damit auf folgenden Ausdruck:

$$NOx = a_0 + a_{SB} * SB + a_{PL} * PL + a_{AGR} * a_{TL} + TL + a_{MD} * MD$$

$$+ a_{TL.SB} * TL * SB + a_{SB^2} * SB^2 + a_{PL^2} * PL^2 + a_{AGR^2} * AGR^2$$

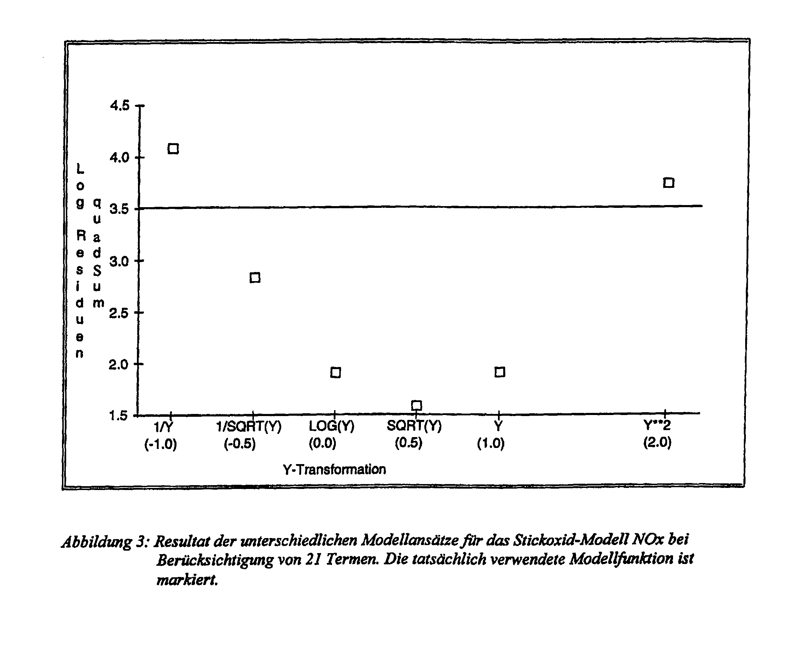

Zusätzlich wurde eine Kontrollberechnung durchgeführt, ob nicht ein anderer Modellansatz, d. h. die Beschreibung der Stickoxidemission NOx mittels einer anderen mathematischen Funktion, zu einer besseren Beschreibung des Verhaltens der Stickoxidemission NOx führt. Bei der der Auswertung zugrundeliegenden Formel entspricht das quadratische Polynom der Stickoxidemission NOx selbst. Versuchsweise wurden auch die Fälle durchgerechnet, daß dasselbe quadratische Polynom stattdessen dem Inversen (1 / NOx) der Stickoxidemission NOx, dem Inversen der Wurzel (1 /SQRT(NOx]), dem Logarithmus (log NOx), der Wurzel (SQRT[NOx]) bzw. dem Quadrat ($NOx^2$) der Stickoxidemission NOx entspricht. Diese Berechnungen geschahen ebenfalls in an sich bekannter Weise mittels der Softwarewerkzeuge RS/1 Discover und RS/1 Explore. In Abb. 3 ist die Wirkung der verschiedenen Funktionsmodellansätze auf den Fehler der Residuen dargestellt. Aufgrund der geringen Unterschiede zwischen den einzelnen Funktionsansätzen zeigte sich, daß für die Stickoxidemission NOx kein Modellwechsel notwendig ist.

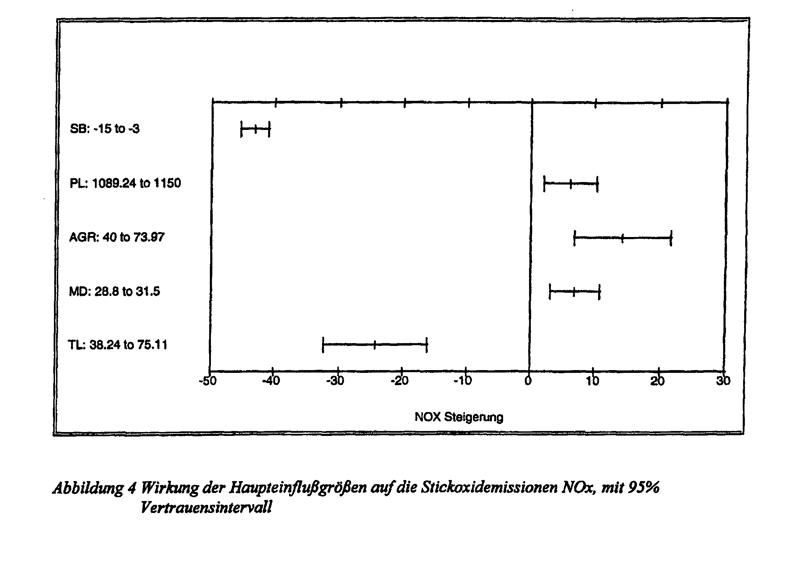

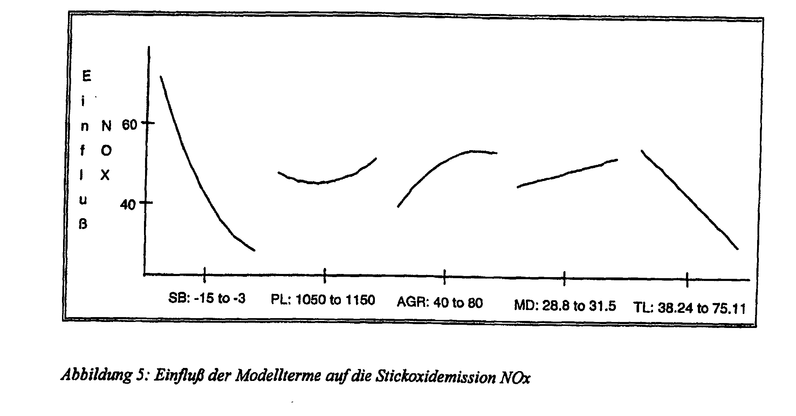

Die Wirkungen der fünf ermittelten Haupteinflußfaktoren Kraftstoffeinspritzbeginn SB, Ladedruck PL, Abgasrückführrate AGR, Drehmoment MD und Lufttemperatur im Saugrohr TL auf die Zielgröße Stickoxidemission NOx sowie der Einfluß dieser fünf Modelleinflußfaktoren sind in den Abbildungen 4 und 5 dargestellt.

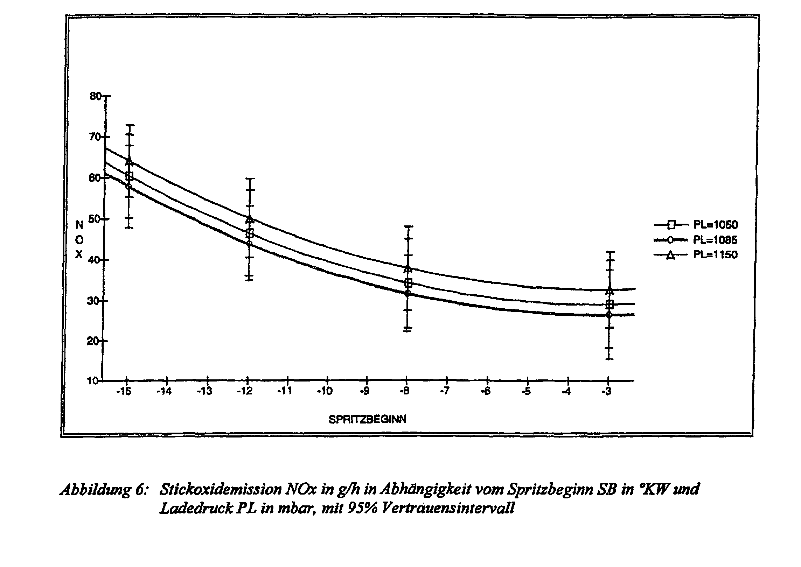

Die Abbildung 6 zeigt die aus der bestimmten Formel ermittelten Werte der Stickoxidemission NOx in Abhängigkeit von den Einflußfaktoren Spritzbeginn SB und mittlerer Ladedruck PL. Die Abgasrückführrate AGR ist dabei auf AGR = 60 %, das Drehmoment MD auf MD = 30 Nm und die Lufttemperatur vor dem Einlaßventil auf TL = 56,675 ° C festgelegt.

Da nunmehr ein vollständiges, sehr gut per Computer verarbeitbares Modell für die Stickoxidemission NOx gemäß Tabelle 8 vorliegt, können mit der ermittelten Formel auf einfache Weise zahlreiche Berechnungen durchgeführt werden. Minimiert man beispielsweise im Rechenmodell den Kraftstoffverbrauch KSTDS unter der Beschränkung, daß die Stickoxidemission NOx zur Erfüllung gesetzlicher Forderungen nie mehr als NOx = 30 g/h betragen darf, so erhält man die optimierten Werte gemäß Tabelle 9.

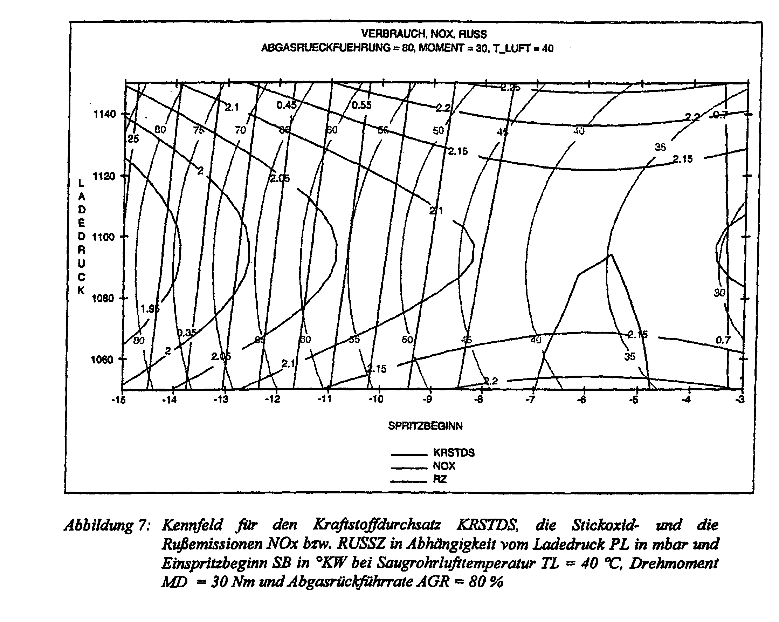

In Abbildung 7 ist für einen Betriebspunkt das Kennfeld anhand der ermittelten Formel gemäß Tabelle 8 berechnet und grafisch dargestellt.

Tabelle 9:

| | | Ergebnis einer Optimierung des Kraftstoffdurchsatzes KRSTDS mit der Beschränkung der Stickoxidemissionen NOx auf NOx < 30 g/h | | | |
|---|---|---|---|---|---|
| | | Faktoren, Zielgrößen | Bereich | Startwerte | Optimum |
| | 1 | Faktoren | | | |
| | 2 | SPRITZBEGINN | -15 to -3 | -12 | -3.005 |
| | 3 | LADEDRUCK | 1050 to 1150 | 1100 | 1095.8 |
| | 4 | ABGASRUECKFUEHR | 40 to 80 | 60 | 40.169 |
| | 5 | MOMENT | 30 | | 30 |
| | 6 | T_EINLASS | 38.24 to 75.11 | 56.67 | 41.47 |
| | 7 | | | | |
| | 8 | zielgrößen | | | |
| | 9 | VERBRAUCH | MIN | | 2.0919 |
| | 10 | NOX | <30 | | 15.461 |

Tabelle 9:   (fortgesetzt)

| Ergebnis einer Optimierung des Kraftstoffdurchsatzes KRSTDS mit der Beschränkung der Stickoxidemissionen NOx auf NOx < 30 g/h | | | | |
|---|---|---|---|---|
| Faktoren, Zielgrößen | | Bereich | Startwerte | Optimum |
| 11 | PARTIKEL | | | 1.2378 |
| 12 | RUSS | | | 0.71468 |

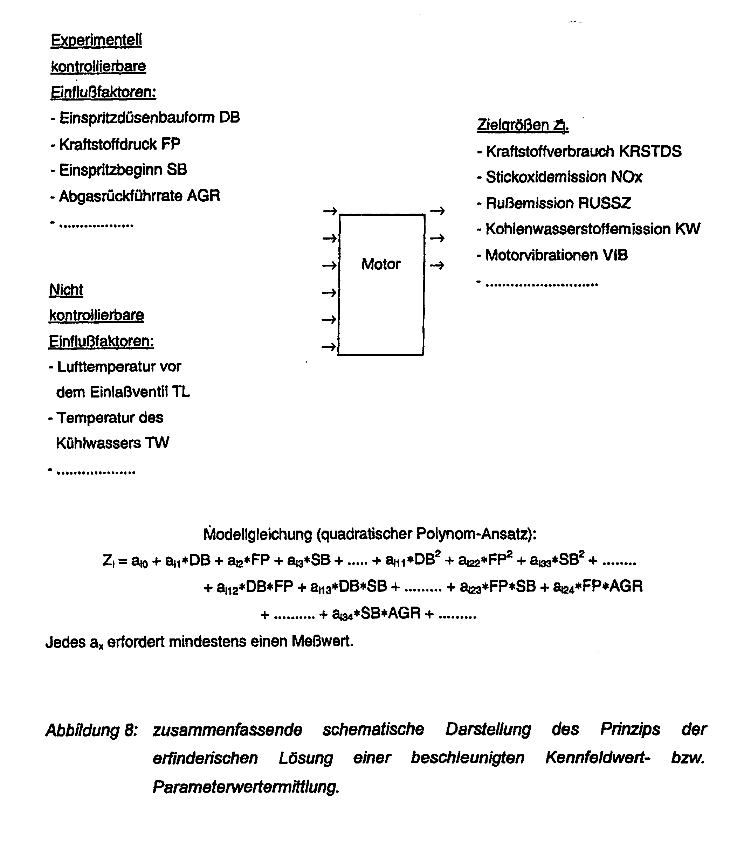

Die Ergebnisse verdeutlichen, daß mit Hilfe der Erfindung in einem Parameterraum mit 5 Einflußfaktoren (SB, PL, AGR, MD, TL) die Anzahl der Meßpunkte um mehr als den Faktor 10 verringert werden kann. Ohne die Verwendung des neuartigen Verfahrens zur Bestimmung von Kennfelddaten bzw. Motorsteuerparametern wären $7 * 4 * 5 * 3 = 420$ Arbeitspunkte zu vermessen gewesen (sofern man die Schwankungen des Drehmoments im Experiment als drei einzustellende Drehmomentwerte MD von MD = 29, 30 und 31 Nm betrachtet). Obwohl statt dessen nur 23 Arbeitspunkte vermessen wurden, gelingt dennoch eine Aussage über Zusammenhänge zwischen den Einflußfaktoren und den Zielgrößen in einer Form, die insbesondere auch die verkoppelten Abhängigkeiten beschreibt. In der Abbildung 8 ist nochmals das Prinzip der beschleunigten Kennfeldwert- bzw. Parameterwertermittlung gemäß der Erfindung zusammengefaßt.

In Weiterbildung der Erfindung läßt sich die bei der Auswertung der experimentell auf dem Motorprüfstand gemessenen Meßwerte ermittelte Formel nicht nur zur Berechnung eines Kennlinienfeldes ausnutzen, sondern man kann die ermittelten Koeffizienten des quadratischen Polynoms direkt zur Steuerung des Motors einsetzen.

In Motorsteuergeräten wird üblicherweise das Drehmoment MD in Form einer Look-up-Tabelle (eben einer numerischen Darstellung des mehrdimensionalen Kennlinienfeldes) in der Speichereinheit abgelegt. Statt die gesamte Look-up-Tabelle in der Speichereinheit abzuspeichern, werden nun nurmehr die ermittelten Koeffizienten des Polynoms in der Speichereinheit abgelegt. Dazu wird nach Ermittlung der Koeffizienten des oben angegebenen, der Meßauswertung zugrundeliegenden Polynoms für NOx dieses in die folgende Normalform für MD gebracht:

$$MD^2 + (1/a_{MD^2}) * (a_{MD} + a_{MD.SB} * SB + a_{MD.PL} * PL + a_{MD.AGR} * AGR + a_{MD.TL} * TL) * MD$$

$$+ (1/a_{MD^2}) * (a_0 + a_{SB} * SB + a_{PL} * PL + a_{AGR} * AGR + a_{TL} * TL + a_{SB.PL} * SB * PL$$

$$+ a_{SB.AGR} * SB * AGR + a_{PLA.GR} * PL * AGR + a_{TL.SB} * TL * SB + a_{TL.PL} * TL * PL$$

$$+ a_{TL.AGR} * TL * AGR + a_{SB^2} * SB^2 + a_{PL^2} * PL^2 + a_{AGR^2} * AGR^2 + a_{TL^2} * TL^2$$

$$- NOx) = 0$$

und anschließend in bekannter Weise nach dem Drehmoment MD aufgelöst:

$$MD_{½} = (1/[2 * a_{MD^2}]) * (a_{MD} + a_{MD.SB} * SB + a_{MD.PL} * PL + a_{MD.AGR} * AGR + a_{MD.TL} * TL)$$

$$\pm \{(1/[2 * a_{MD^2}])^2 * (a_{MD} + a_{MD.SB} * SB + a_{MD.PL} * PL + a_{MD.AGR} * AGR$$

$$+ a_{MD.TL} * TL)^2 - (1/a_{MD^2}) * (a_0 + a_{SB} * SB + a_{PL} * PL + a_{AGR} * AGR$$

$$+ a_{TL} * TL + a_{SB.PL} * SB * PL + a_{SB.AGR} * SB * AGR + a_{PL.AGR} * PL * AGR$$

$$+ a_{TL.SB} * TL * SB + a_{TL.PL} * TL * PL + a_{TL.AGR} * TL * AGR + a_{SB^2} * SB^2$$

$$+ a_{PL^2} * PL^2 + a_{AGR^2} * AGR^2 + a_{TL^2} * TL^2 - NOx)\}^{½}$$

Für die auf zehn signifikante Terme reduzierte Formel gemäß Tabelle 8 lauten die Zusammenhänge stattdes-sen:

$$MD = - (1/a_{MD}) * (a_0 + a_{SB} * SB + a_{PL} * PL + a_{AGR} * AGR + a_{TL} * TL - NOx$$

$$+ a_{TL.SB} * TL * SB + a_{SB^2} * SB^2 + a_{PL^2} * PL^2 + a_{AGR^2} * AGR^2)$$

Ergeht nun von der Steuer- und Recheneinheit des Motorsteuergerätes eine Anforderung eines bestimmten, benötigten Drehmoments MD, so wird nicht mehr dieser benötigte Wert des Drehmoments und seine ihn bestimmenden Einflußfaktoren in einer in der Speichereinheit gespeicherten Look-up-Tabelle ermittelt, sondem die Parameter werden derart festgelegt, daß sich aus der angegebenen Formel gerade das geforderte Drehmoment ergibt. Wie Versuche ergeben haben, ist es bereits mit einer geringen Anzahl von gemessenen Arbeitspunkten möglich, das angeforderte Drehmoment mit einer Genauigkeit von 2 bis 3 % zu treffen. Dieser Wert liegt im Bereich der Serienstreuung bei der Serienfertigung von Verbrennungsmotoren, so daß eine darüber hinaus gehende Genauigkeit der Drehmomentsteuerung - die entsprechend mehr gemessene Arbeitapunkte erfordem würde - unnötig ist.

Verwendet man mithin zur Steuerung des Verbrennungsmotors lediglich die bei vorangegangenen Arbeitspunkt-Messungen ermittelten Funktionsparameter und nicht mehr das komplette Kennlinienfeld, so lassen sich beträchtliche Einsparungen an Speicherplatz erzielen. Die Speicherung von 7000 Punkten eines mehrdimensionalen Kennlinienfeldes erfordert beispielsweise bei einer Genauigkeit von jeweils 8 bit = 1 Byte eine Speicherkapazität von etwa 7 kByte; werden stattdessen z. B. die Parameterkoeffizienten eines quadratischen Polynoms mit insgesamt 21 Termen abgespeichert, so werden bei vergleichbarer, für die Praxis völlig ausreichender Genauigkeit nur 21 Byte benötigt. Für die Auswertung des Polynoms wird keine leistungsstärkere Steuer- und Recheneinheit im Motorsteuergerät benötigt als bei der Abspeicherung aller Werte des Kennlinienfeldes: auch bei konventionellen Motorsteuerverfahren und -geräten müssen nämlich laufend Interpolationsaufgaben berechnet werden, da ein realer Motor nur selten bezüglich aller Parameter genau auf solchen Werten läuft, die in der Look-up-Tabelle abgespeichert sind.

Durch das erfindungsgemäße Steuerverfahren für einen Verbrennungsmotor wird also ein Aufbau eines elektronischen Motorsteuergerätes ermöglicht, der mit wesentlich geringerem Speicherplatz in der Speichereinheit auskommt, ohne daß dadurch andere Komponenten des Motorsteuergerätes leistungsstärker und daher kostspieliger ausgelegt werden müßten.

**Patentansprüche**

**1.** Verfahren zur Bestimmung von Kennfeldern für die Kennfeldsteuerung eines Verbrennungsmotors, bei dem mit Hilfe experimenteller Versuche einer Vielzahl von Kombinationen von mittels Sensoren zu messenden Werten mehrerer unterschiedlicher Einflußfaktoren jeweils ein Ausgangswert für eine Zielgröße in Gestalt eines sog. Kennfeldes zugeordnet wird wobei

- der Zielgröße eine mathematische Funktion zugeordnet wird, die eine Abhängigkeit der Zielgröße von den mehreren Einflußfaktoren unter Verwendung eines Parameters oder mehrerer Parameter beschreibt;

- in den experimentellen Versuchen ein oder mehrere Ausgangswerte für die Zielgröße des Verbrennungsmotors gemessen werden, wobei die Anzahl der gemessenen Ausgangswerte mindestens gleich der maximalen Anzahl der in der verwendeten mathematischen Funktion vorkommenden Parameter ist;

- anschließend anhand der in den experimentellen Versuchen gemessenen Ausgangswerte der oder die Parameter für die mathematische Funktion der Zielgröße berechnet werden;

 **dadurch gekennzeichnet, daß**

- anschließend anhand der mathematischen Funktion mit dem oder den berechneten Parameter(n) weitere Ausgangswerte der Zielgröße berechnet werden, wobei nach der Berechnung der Parameter der einen oder mehreren Funktion(en)der einen oder mehreren Zielgröße(n) überprüft wird, welche Einflußfaktoren jeweils nur einen im Rahmen der geforderten Genauigkeit vernachlässigbaren Einfluß auf die eine oder mehreren Zielgröße(n) haben, und diese bestimmten, vernachlässigbaren Einflußfaktoren daraufhin in der jeweils betrachteten Funktion nicht mehr berücksichtigt werden.

**2.** Verfahren nach Anspruch 1, **dadurch gekennzeichnet, daß** die Bestimmung der Kennfelder für mehrere Zielgrößen durchgeführt wird, wobei jeder Zielgröße eine mathematische Funktion zugeordnet wird, die eine Abhängigkeit der Zielgröße von mehreren Einflußfaktoren unter Verwendung eines oder mehrerer Parameter(s) beschreibt.

**3.** Verfahren nach einem der vorhergehenden Ansprüche, **dadurch gekennzeichnet, daß** die eine oder mehreren Zielgrößen

- der Treibstoffverbrauch KRSTDS und/oder
- die Stickoxid-Emission NOx und/oder
- die Rußemission RUSSZ

sind.

4. Verfahren nach einem der vorhergehenden Ansprüche, **dadurch gekennzeichnet, daß** die Einflußfaktoren kontrollierbare Einflußfaktoren und/oder nicht kontrollierbare Einflußfaktoren sind.

5. Verfahren nach Anspruch 4, **dadurch gekennzeichnet, daß** die kontrollierbaren Einflußfaktoren

- der Kraftstoffeinspritzbeginn SB und/oder
- der mittlere Ladedruck PL und/oder
- die Abgasrückführrate AGR und/oder
- das Drehmoment MD und/oder
- die Motordrehzahl DRZ

sind.

6. Verfahren nach Anspruch 4 oder 5, **dadurch gekennzeichnet, daß** die nicht kontrollierbaren Einflußfaktoren

- die Lufttemperatur im Saugrohr vor dem Einlaßventil TL und/oder
- die Lufttemperatur am Ausgang des Ladeluftkühlers TLAD und/oder
- die Kühlwassertemperatur TW

sind.

7. Verfahren nach einem der vorhergenden Ansprüche, **dadurch gekennzeichnet, daß** die Anzahl der Meßwerte größer als die maximale Anzahl der in einer verwendeten Funktion vorkommenden Parameter ist und mittels an sich bekannter statistischer Methoden, insbesondere statistischer Ausgleichsverfahren, die Anpaßgenauigkeit der Parameter erhöhz wird.

8. Verfahren nach Anspruch 7, **dadurch gekennzeichnet, daß** das verwendete statistische Ausgleichsverfahren das Verfahren der kleinsten Quadrate mittels einer Regressionsgerade ist.

9. Verfahren nach einem der vorhergehenden Ansprüche, **dadurch gekennzeichnet, daß** die mathematische Funktion

- ein Polynom ist und/oder

- eine Exponential-Funktion Ist, wobei das Argument der Exponential-Funktion ein Polynom ist, und/oder

- eine logarithmische Funktion ist, wobei das Argument der togarithmischen Funktion ein Polynom ist, und/oder

- eine quadratische Funktion ist, wobei das Argument der quadratischen Funktion ein Polynom ist, und/oder

- eine inverse Funktion ist, wobei das Argument der inversen Funktion ein Polynom ist, und/oder

- eine Wurzelfunktion ist, wobei das Argument der Wurzelfunktion ein Polynom ist, und/oder

- eine inverse Wurzelfunktion ist, wobei das Argument der inversen Wurzelfunktion ein Polynom ist.

10. Verfahren nach Anspruch 9, **dadurch gekennzeichnet, daß** das Polynom ein quadratisches Polynom eines oder mehrerer Variabler ist, wobei die Variablen die Einflußfaktoren sind.

11. Verfahren nach Anspruch 9 oder 10, **dadurch gekennzeichnet, daß** die Parameter die Koeffizienten des Polynoms sind.

12. Verfahren nach Anspruch 1, **dadurch gekennzeichnet, daß** sukzessive der jeweils am meisten vernachlässigbare Einflußfaktor - d. h. der Einflußfaktor mit der geringsten Bedeutung für die jeweilige Zielgröße - bestimmt wird und anschließend die Berechnung der Parameter der jeweiligen Funktion für die jeweilige Zielgröße unter Weglassung des derart bestimmten Einflußfaktors wiederholt wird.

13. Verfahren nach einem der vorhergehenden Ansprüche, **dadurch gekennzeichnet, daß** vor Beginn der experimentellen Messungen für einige oder jeden experimentell kontrollierbaren Einflußfaktor ein kleinster Einstellwert $f_{min}$ sowie ein größter Einstellwert $f_{max}$ festgelegt werden und zwischen diesen Werten $f_{min}$ und $f_{max}$ kein, ein oder mehrere weitere Zwischeneinstellwerte zur Messung festgelegt werden.

14. Verfahren nach Anspruch 13, **dadurch gekennzeichnet, daß** die Zwischeneinstellwerte äquidistant festgelegt werden.

15. Verfahren nach Anspruch 13 oder 14, **dadurch gekennzeichnet, daß** die Einstellwerte mehrerer oder aller Einflußfaktoren zur besseren Vergleichbarkeit der Parameter dahingehend normiert werden, daß ihr kleinster einzustellender Wert $f_{min}$ jeweils gleich einem bestimmten, übereinstimmenden numerischen Wert - insbesondere 0 oder -1 - gesetzt wird, während ihr größter einzustellender Wert $f_{max}$ jeweils gleich einem anderen, übereinstimmenden numerischen Wert - insbesondere +1 - gesetzt wird.

16. Verfahren nach einem der vorhergehenden Ansprüche, **dadurch gekennzeichnet, daß** während der experimentellen Messungen ein oder mehrere weitere mögliche Einflußgrößen jeweils mitgemessen werden und - sofern sich bei der Auswertung der Messungen erweist, daß diese möglichen Einflußgrößen einen im Rahmen der geforderten Genauigkeit nicht vernachlässigbaren Einfluß auf eine oder mehrere Zielgröße(n) haben - zumindest diese nicht vernachlässigbaren weiteren Einflußgrößen dann als Einflußfaktoren in die mathematische(n) Funktion (en) der einen oder mehreren Zielgröße(n)einbezogen werden.

17. Verfahren nach einem der vorhergehenden Ansprüche, **dadurch gekennzeichnet, daß** die Zielgrößen

   - das Drehmoment MD und/oder
   - die Katalysatortemperatur TKAT und/oder
   - die Abgastemperatur TA

   sind.

18. Verfahren nach einem der vorhergehenden Ansprüche, **dadurch gekennzeichnet, daß** die Einflußfaktoren

   - die Drehzahl DRZ und/oder
   - der Lambda-Wert LAMA und/oder
   - der Zündwinkel ZWOUT und/oder
   - die Last RLW und/oder
   - der mittlere Ladedruck PL

   sind.

**Claims**

1. Method for determining characteristic maps for controlling the characteristic map of an internal combustion engine, in which an output value for a target variable in the form of a so-called characteristic map is assigned in each case with the aid of experimental trials on a multiplicity of combinations of values, to be measured by sensors, of a plurality of different influencing factors,

   - the target variable being assigned a mathematical function which describes a dependence of the target variable on the plurality of influencing factors by making use of a parameter or a plurality of parameters;
   - one or more output values for the target variable for the internal combustion engine being measured in the experimental trials, the number of the measured output values being at least equal to the maximum number of parameters occurring in the mathematical function used; and

- subsequently the output values measured in the experimental trials being used to calculate the parameter or parameters for the mathematical function of the target variable;

**characterized in that**

- subsequently further output values of the target variable are calculated with the aid of the mathematical function of the calculated parameter or parameters, a check being made after the calculation of the parameters of the one or more function(s) of the one or more target variable(s) as to which influencing factors in each case have only a negligible influence, in terms of the accuracy required, on the one or more target variable(s), and these determined, negligible influencing factors being thereupon no longer taken into account in the function respectively considered.

2. Method according to Claim 1, **characterized in that** the determination of the characteristic maps is carried out for a plurality of target variables, each target variable being assigned a mathematical function which describes a dependence of the target variable on a plurality of influencing factors by using one or more parameter(s).

3. Method according to one of the preceding claims, **characterized in that** one or more target variables are

- the fuel consumption KRSTDS and/or
- the nitrogen oxide emission NOx and/or
- the soot emission RUSSZ.

4. Method according to one of the preceding claims, **characterized in that** the influencing factors are controllable influencing factors and/or non-controllable influencing factors.

5. Method according to Claim 4, **characterized in that** the controllable influencing factors are

- the start of fuel injection SB and/or
- the mean charging pressure PL and/or
- the exhaust gas recirculation rate AGR and/or
- the torque MD and/or
- the engine speed DRZ.

6. Method according to Claim 4 or 5, **characterized in that** the non-controllable influencing factors are

- the air temperature in the induction pipe upstream of the inlet valve TL and/or
- the air temperature at the outlet of the charge-air cooler TLAD and/or
- the cooling-water temperature TW.

7. Method according to one of the preceding claims, **characterized in that** the number of measured values is greater than the maximum number of parameters occurring in a function used, and the matching accuracy of the parameters is increased by means of statistical methods known per se, in particular statistical fitting methods.

8. Method according to Claim 7, **characterized in that** the statistical fitting method used is the method of least squares by means of a regression line.

9. Method according to one of the preceding claims, **characterized in that** the mathematical function

- is a polynomial and/or
- is an exponential function, the argument of the exponential function being a polynomial, and/or
- is a logarithmic function, the argument of the logarithmic function being a polynomial and/or
- is a quadratic function, the argument of the quadratic function being a polynomial, and/or
- is an inverse function, the argument of the inverse function being a polynomial, and/or
- is a root function, the argument of the root function being a polynomial, and/or
- is an inverse root function, the argument of the inverse root function being a polynomial.

10. Method according to Claim 9, **characterized in that** the polynomial is a quadratic polynomial of one or more variables, the variables being the influencing factors.

11. Method according to Claim 9 or 10, **characterized in that** the parameters are the coefficients of the polynomial.

12. Method according to Claim 1, **characterized in that** the respectively most negligible influencing factor - that is to say the influencing factor of least importance for the respective target variable - is successively determined and the calculation of the parameters of the respective function for the respective target variable is subsequently repeated omitting the influencing factor thereby determined.

13. Method according to one of the preceding claims, **characterized in that** before the start of the experimental measurements a smallest set value $f_{min}$ and a largest set value $f_{max}$ are fixed for some or each experimentally controllable influencing factor, and no intermediate set value or one or more further intermediate set values are fixed for measurement between these values $f_{min}$ and $f_{max}$.

14. Method according to Claim 13, **characterized in that** the intermediate set values are fixed equidistantly.

15. Method according to Claim 13 or 14, **characterized in that** for the purpose of better comparability of parameters the set values of several or all the influencing factors are normalized to the effect that their smallest value $f_{min}$ to be set is set in each case to be equal to a specific, identical numerical value - in particular 0 or -1 - while their largest value $f_{max}$ to be set is set in each case to be equal to another, identical numerical value - in particular +1.

16. Method according to one of the preceding claims, **characterized in that** during the experimental measurements one or more further possible influencing variables are also measured in each case and - if it emerges in evaluating the measurements that these possible influencing variables have an influence on one or more target variable(s) which cannot be neglected in terms of the required accuracy - at least these non-negligible further influencing variables are then incorporated as influencing factors into the mathematical function(s) of the one or more target variable(s).

17. Method according to one of the preceding claims, **characterized in that** the target variables are

- the torque MD and/or
- the catalyst temperature TKAT and/or
- the exhaust-gas temperature TA.

18. Method according to one of the preceding claims, **characterized in that** the influencing factors are

- the speed DRZ and/or
- the lambda value LAMA and/or
- the ignition angle ZWOUT and/or
- the load RLW and/or
- the mean charging pressure PL.

**Revendications**

1. Procédé pour la détermination de diagrammes caractéristiques pour la commande par diagramme caractéristique d'un moteur à combustion, au cours duquel, à l'aide d'essais expérimentaux d'un grand nombre de combinaisons de valeurs à mesurer au moyen de capteurs et relatives à plusieurs facteurs d'influence différents selon le cas, une valeur de sortie est appliquée à une grandeur cible sous forme de ce qu'on appelle un diagramme caractéristique, dans lequel

- à la grandeur cible est attribuée une fonction mathématique qui décrit une dépendance de la grandeur cible par rapport à plusieurs facteurs d'influence moyennant utilisation d'un ou de plusieurs paramètres ;
- dans les essais expérimentaux, une ou plusieurs valeurs de sortie sont mesurées pour la grandeur cible du moteur à combustion, le nombre de valeurs de sortie mesurées étant au moins égal au nombre maximal de paramètres apparaissant dans la fonction mathématique employée ;
- ensuite, à l'aide des valeurs de sortie mesurées dans les essais expérimentaux, le ou les paramètres sont calculés pour la fonction mathématique de la grandeur cible ;

**caractérisé en ce que**

- ensuite, à l'aide de la fonction mathématique avec le ou les paramètres calculé(s), d'autres valeurs de sortie de la grandeur cible sont calculées, où après le calcul des paramètres de l'une ou de plusieurs des fonctions de l'une ou de plusieurs des grandeurs cibles, on vérifie quels facteurs d'influence, selon le cas, ont respectivement seulement une influence négligeable dans le cadre de la précision demandée sur l'une ou sur plusieurs des grandeurs cibles et ces facteurs d'influence négligeables trouvés ne sont dès lors plus pris en compte dans la fonction respectivement concernée.

2.  Procédé selon la revendication 1, **caractérisé en ce que** la détermination des diagrammes caractéristiques est effectuée pour plusieurs grandeurs cibles, une fonction mathématique qui décrit une dépendance de la grandeur cible de plusieurs facteurs d'influence moyennant l'utilisation d'un ou plusieurs paramètres étant attribuée à chaque grandeur cible.

3.  Procédé selon l'une quelconque des revendications précédentes, **caractérisé en ce que** l'une ou plusieurs des grandeurs cibles sont :

    - la consommation de carburant KRSTDS et/ou
    - l'émission d'oxyde d'azote NOx et/ou
    - l'émission de suie RUSSZ.

4.  Procédé selon l'une quelconque des revendications précédentes, **caractérisé en ce que** les facteurs d'influence sont des facteurs d'influence contrôlables et/ou des facteurs d'influence non contrôlables.

5.  Procédé selon la revendication 4, **caractérisé en ce que** les facteurs d'influence contrôlables sont :

    - le début d'injection du carburant SB et/ou
    - la pression moyenne de suralimentation PL et/ou
    - le taux de recirculation des gaz d'échappement AGR et/ou
    - le couple de rotation MD et/ou
    - le régime moteur DRZ.

6.  Procédé selon la revendication 4 ou 5, **caractérisé en ce que** les facteurs d'influence non contrôlables sont :

    - la température de l'air dans le tuyau d'aspiration en amont de la soupape d'admission TL et/ou
    - la température de l'air à la sortie du refroidisseur d'air de suralimentation TLAD et/ou
    - la température de l'eau de refroidissement TW.

7.  Procédé selon l'une quelconque des revendications précédentes, **caractérisé en ce que** le nombre de valeurs de mesure est supérieur au nombre maximal des paramètres apparaissant dans une fonction utilisée et qu'au moyen de méthodes statistiques connues en soi, en particulier de procédé de compensation statistique, la précision d'adaptation des paramètres est augmentée.

8.  Procédé selon la revendication 7, **caractérisé en ce que** le procédé de compensation statistique employé est le procédé des moindres carrés au moyen d'une droite de régression.

9.  Procédé selon l'une quelconque des revendications précédentes, **caractérisé en ce que** la fonction mathématique :

    - est un polynôme et/ou
    - est une fonction exponentielle dans laquelle l'argument de la fonction exponentielle est un polynôme et/ou
    - est une fonction logarithmique dans laquelle l'argument de la fonction logarithmique est un polynôme et/ou
    - est une fonction quadratique dans laquelle l'argument de la fonction quadratique est un polynôme et/ou
    - est une fonction inverse dans laquelle l'argument de la fonction inverse est un polynôme et/ou
    - est une fonction racine dans laquelle l'argument de la fonction racine est un polynôme et/ou
    - est une fonction racine inverse dans laquelle l'argument de la fonction racine inverse est un polynôme.

10. Procédé selon la revendication 9, **caractérisé en ce que** le polynôme est un polynôme quadratique d'une ou de plusieurs variables, les variables étant des facteurs d'influence.

**11.** Procédé selon la revendication 9 ou 10, **caractérisé en ce que** les paramètres sont les coefficients du polynôme.

**12.** Procédé selon la revendication 11, **caractérisé en ce que** successivement le facteur d'influence le plus négligeable - c'est-à-dire le facteur d'influence ayant la moindre importance pour la grandeur cible respective - est déterminé et, ensuite, le calcul des paramètres de la fonction respective pour la grandeur cible respective est répété moyennant l'omission du facteur d'influence ainsi déterminé.

**13.** Procédé selon l'une quelconque des revendications précédentes, **caractérisé en ce qu'**avant le début des mesures expérimentales de certains ou de chaque facteur(s) d'influence contrôlable(s) expérimentalement, une valeur de réglage minimale $f_{min}$ ainsi qu'une valeur de réglage maximale $f_{max}$ sont fixées et, qu'entre ces valeurs $f_{min}$ et $f_{max}$, une, aucune ou plusieurs autres valeurs de réglage intermédiaires sont fixées pour la mesure.

**14.** Procédé selon la revendication 13, **caractérisé en ce que** les valeurs de réglage intermédiaires sont fixées à des intervalles constants.

**15.** Procédé selon la revendication 13 ou 14, **caractérisé en ce que** les valeurs de réglage de plusieurs ou de tous les facteurs d'influence sont désignées en vue d'une meilleure comparabilité des paramètres de sorte que sa plus petite valeur à régler $f_{min}$ est à chaque fois spécifiée égale à une valeur numérique déterminée correspondante - en particulier 0 ou -1 -, alors que leur plus grande valeur à régler $f_{max}$ est à chaque fois spécifiée, égale à une autre valeur numérique correspondante - en particulier +1.

**16.** Procédé selon l'une quelconque des revendications précédentes, **caractérisé en ce que**, pendant les mesures expérimentales, une ou plusieurs autres grandeurs d'influence possibles sont, respectivement, mesurées également et - pour autant que lors de l'évaluation des mesures, il apparaisse que ces grandeurs d'influence possibles ont une influence non négligeable dans le cadre de la précision demandée sur une ou plusieurs grandeurs cibles - ces autres grandeurs d'influence non négligeables, au moins, sont alors intégrées en tant facteurs d'influence dans la(les) fonction(s) mathématique(s) de l'une ou de plusieurs des grandeurs cibles.

**17.** Procédé selon l'une quelconque des revendications précédentes, **caractérisé en ce que** les grandeurs cibles sont :

- le couple de rotation MD et/ou
- la température du catalyseur TKAT et/ou
- la température des gaz d'échappement TA.

**18.** Procédé selon l'une quelconque des revendications précédentes, **caractérisé en ce que** les facteurs d'influence sont :

- le régime DRZ et/ou
- la valeur lambda LAMA et/ou
- l'angle d'allumage ZWOUT et/ou
- la charge RLW et/ou
- la pression moyenne de suralimentation PL.

*Abbildung 1: Einfluß der 23 Arbeitspunkte auf die Modellbildung*

*Abbildung 2: Abhängigkeiten der Ruß- und Stickoxid-Emissionen RUSSZ und NOx in g/h von Einspritzbeginn SB in °KW / Ladedruck PL in mbar / Lufttemperatur im Saugrohr TL in °C*

*Abbildung 3: Resultat der unterschiedlichen Modellansätze für das Stickoxid-Modell NOx bei Berücksichtigung von 21 Termen. Die tatsächlich verwendete Modellfunktion ist markiert.*

*Abbildung 4 Wirkung der Haupteinflußgrößen auf die Stickoxidemissionen NOx, mit 95% Vertrauensintervall*

*Abbildung 5: Einfluß der Modellterme auf die Stickoxidemission NOx*

*Abbildung 6:* Stickoxidemission NOx in g/h in Abhängigkeit vom Spritzbeginn SB in °KW und Ladedruck PL in mbar, mit 95% Vertrauensintervall

VERBRAUCH, NOX, RUSS
ABGASRUECKFUEHRUNG = 80, MOMENT = 30, T_LUFT = 40

*Abbildung 7: Kennfeld für den Kraftstoffdurchsatz KRSTDS, die Stickoxid- und die Rußemissionen NOx bzw. RUSSZ in Abhängigkeit vom Ladedruck PL in mbar und Einspritzbeginn SB in °KW bei Saugrohrlufttemperatur TL = 40 °C, Drehmoment MD = 30 Nm und Abgasrückführrate AGR = 80 %*

<u>Experimentell</u>

<u>kontrollierbare</u>

<u>Einflußfaktoren:</u>

- Einspritzdüsenbauform DB

- Kraftstoffdruck FP

- Einspritzbeginn SB

- Abgasrückführrate AGR

- .................

<u>Zielgrößen</u> $Z_i$.

- Kraftstoffverbrauch KRSTDS

- Stickoxidemission NOx

- Rußemission RUSSZ

- Kohlenwasserstoffemission KW

- Motorvibrationen VIB

- .......................

Motor

<u>Nicht</u>

<u>kontrollierbare</u>

<u>Einflußfaktoren:</u>

- Lufttemperatur vor

  dem Einlaßventil TL

- Temperatur des

  Kühlwassers TW

- ..................

Modellgleichung (quadratischer Polynom-Ansatz):

$$Z_i = a_{i0} + a_{i1}*DB + a_{i2}*FP + a_{i3}*SB + ..... + a_{i11}*DB^2 + a_{i22}*FP^2 + a_{i33}*SB^2 + ........$$

$$+ a_{i12}*DB*FP + a_{i13}*DB*SB + ......... + a_{i23}*FP*SB + a_{i24}*FP*AGR$$

$$+ .......... + a_{i34}*SB*AGR + .........$$

Jedes $a_x$ erfordert mindestens einen Meßwert.

*Abbildung 8:* *zusammenfassende schematische Darstellung des Prinzips der erfinderischen Lösung einer beschleunigten Kennfeldwert- bzw. Parameterwertermittlung.*